# EUROPEAN PATENT APPLICATION

(11) **EP 2 163 285 A1**
(43) Date of publication of application: **17.03.2010**
(21) Application number: 08164153.2
(22) Date of filing: 11.09.2008
(51) Int. Cl.: A63F 13/00

(54) **Game apparatus**

(71) Applicant: C-Media Electronics Inc., Taipei City 106 (TW)
(72) Inventor: Chiang, John, Taipei City 106 (TW)
(74) Representative: Lermer, Christoph

(57) **Abstract**

A video and audio signal processor includes a game engine interface mechanism, a video mechanism, a video card, an integration mechanism and a sound effect card. The game engine interface mechanism provides graphic parameters and original sound effect parameters. The video mechanism receives the graphic parameters from the game engine interface and provides video data based on the graphic parameters. The video card receives the video data from the video mechanism and instructs a display to provide images based on the video data. The integration mechanism receives the graphic parameters and the original sound effect parameters from the game engine interface mechanism, analyzes the graphic parameters to derive desired sound effect parameters and integrates the desired sound effect parameters with the original sound effect parameters. The sound effect card instructs at least one speaker to provide sounds under the control of the integration mechanism.

## Description

### Field of the invention

The present invention relates to a game apparatus and, more particularly, to a game apparatus for providing well-coordinated images and sounds.

### Description of the Related Art

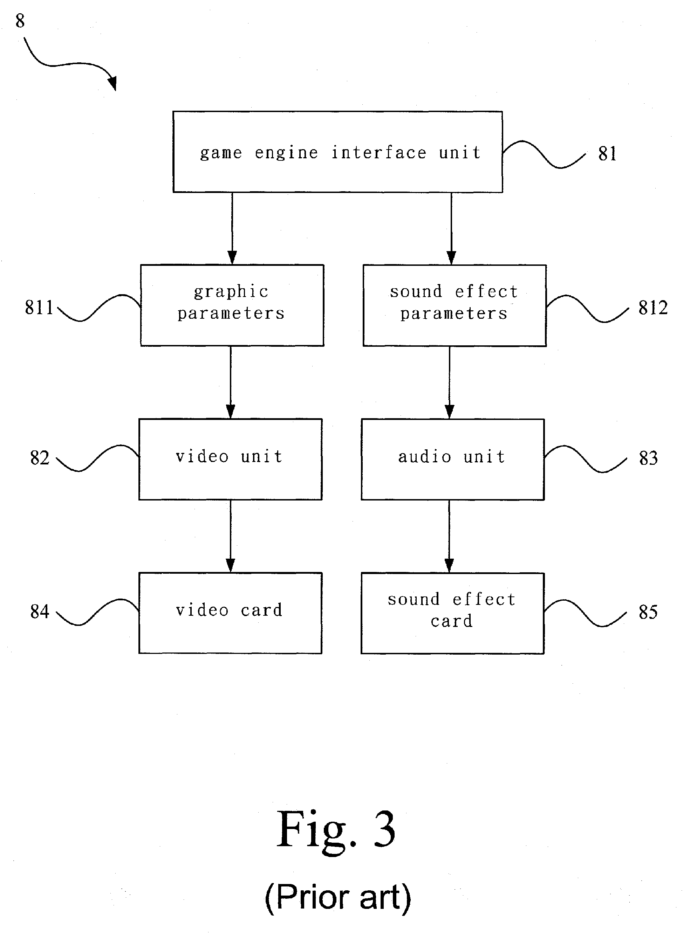

Referring to Fig. 3, there is shown a conventional video and audio signal processor 8 for a game apparatus. The video and audio signal processor 8 includes a game engine interface unit 81, a video unit 82 connected to the game engine interface unit 81, a video card 84 connected to the video unit 82, an audio unit 83 connected to the game engine interface unit 81 and a sound effect card 85 connected to the audio unit 83. In operation, the game engine interface unit 81 provides graphic parameters 81 to the video unit 82 and sound effect parameters 812 to the video unit 83. Based on the graphic parameters 811, the video unit 82 provides video data to the video card 84. Based on the sound effect parameters 812, the audio unit provides audio data to the sound effect card 85.

As discussed above, the video and audio signal processor 8 provides the video and audio data. However, the game engine interface unit 81 provides the graphic parameter 811 to the video unit 82 and the sound effect parameter 812 to the video unit 83, which is independent of the video unit 82. The amount of the graphic parameter 811 is not equivalent to the amount of the sound effect parameter 812. For example, when a character treads leaves on the ground, the graphic parameters 81 can successfully be transmitted to the video unit 82 while all of the sound effect parameters 812 are not sent to the audio unit 83. Visual effects and sound effects provided by the video and audio signal processor 8 are limited.

The present invention is therefore intended to obviate or at least alleviate the problems encountered in prior art.

### Summary of the invention

It is the primary objective of the present invention to provide a video and audio signal processor for providing well-coordinated visual effects and sound effects.

To achieve the foregoing objective, the video and audio signal processor includes a game engine interface mechanism, a video mechanism, a video card, an integration mechanism and a sound effect card. The game engine interface mechanism provides graphic parameters and original sound effect parameters. The video mechanism receives the graphic parameters from the game engine interface and provides video data based on the graphic parameters. The video card receives the video data from the video mechanism and instructs a display to provide images based on the video data. The integration mechanism receives the graphic parameters and the original sound effect parameters from the game engine interface mechanism, analyzes the graphic parameters to derive desired sound effect parameters and integrates the desired sound effect parameters with the original sound effect parameters. The sound effect card instructs at least one speaker to provide sounds under the control of the integration mechanism.

Other objectives, advantages and features of the present invention will become apparent from the following description referring to the attached drawings.

### Brief description of the drawings

The present invention will be described via the detailed illustration of the preferred embodiments referring to the drawings.
- FIG.1: is a block diagram of mother board equipped with a video and sound signal processor according to the preferred embodiment of the present invention.
- FIG.2: is a block diagram of the video and sound signal processor shown in Fig. 1 .
- FIG.3: is a block diagram of a conventional video and sound signal processor for a game apparatus.

### Description of the preferred embodiment

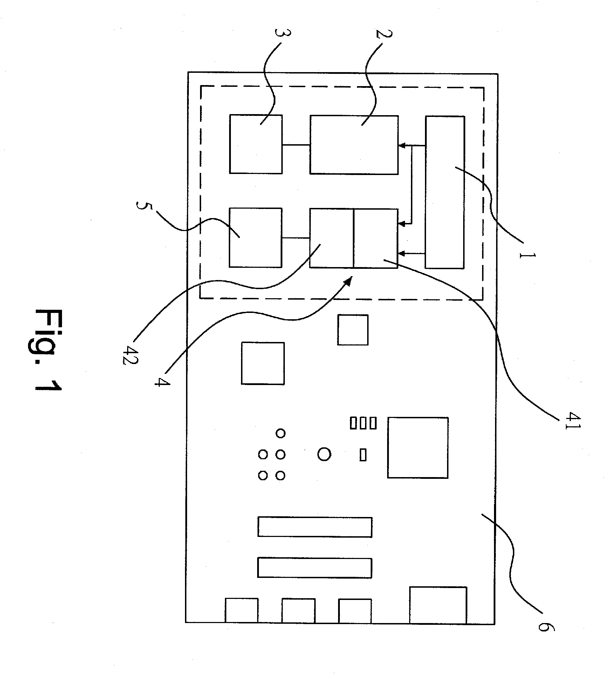

Referring to Fig. 1 , there is shown a mother board 6 equipped with a video and audio signal processor according to the preferred embodiment of the present invention.

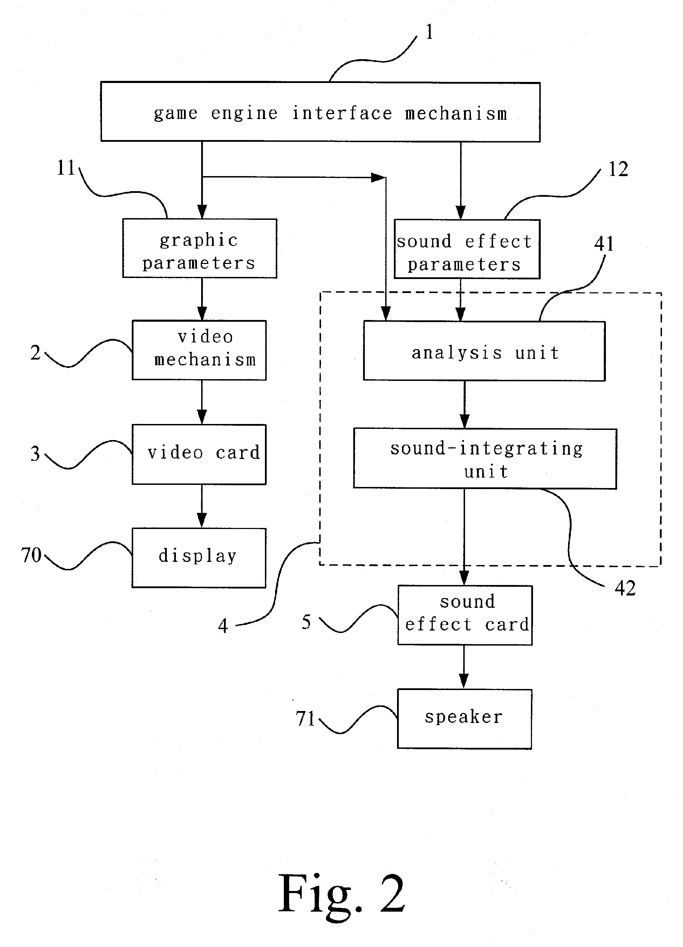

Referring to Fig. 2, the video and audio signal processor includes a game engine interface mechanism 1, an audio mechanism 2 connected to the game engine interface mechanism 1 , a video card 3 connected to the audio mechanism 2, an integration mechanism 4 connected to the game engine interface mechanism 1 and a sound effect card 5 connected to the game engine interface mechanism 1 .

The game engine interface mechanism 1 provides graphic parameters 1 1 and sound effect parameters 12.

The video mechanism 2 receives the graphic parameters 11 from the game engine interface mechanism 1. Based on the graphic parameters 11, the video mechanism 2 provides video data.

The video card 3 receives video data from the video mechanism 2. Based on the video data, the video card 3 instructs a display 70 to provide images.

The integration mechanism 4 includes an analysis unit 41 connected to the game engine interface mechanism 1 and a sound-integrating unit 42 connected to the analysis unit 41. The integration mechanism 4 may be embodied in an SOC or an FPGA. The analysis unit 41 receives the graphic parameters 1 1 and the sound effect parameters 12 from the game engine interface mechanism 1 and analyzes the graphic parameters 11 to derive desired sound effect parameters. The sound-integrating unit 42 combines the desired sound effect parameters with the sound effect parameters 12 to provide audio data.

The sound effect card 5 receives the audio data from the sound-integrating unit 42. Based on the audio data, the sound effect card 5 instructs at least one speaker 71 to provide sounds.

As discussed above, the graphic parameters 11 are considered during the production of the audio data. Thus, the images on the display 70 are well coordinated with the sounds from the speaker 71. Therefore, the images and the sounds are realistic..

The present invention has been described via the detailed illustration of the preferred embodiment. Those skilled in the art can derive variations from the preferred embodiment without departing from the scope of the present invention. Therefore, the preferred embodiment shall not limit the scope of the present invention defined in the claims.

## Claims

1. A video and audio signal processor comprising:
a game engine interface mechanism for providing graphic parameters and original sound effect parameters;
a video mechanism for receiving the graphic parameters from the game engine interface and providing video data based on the graphic parameters;
a video card for receiving the video data from the video mechanism and instructing a display to provide images based on the video data;
an integration mechanism for receiving the graphic parameters and the original sound effect parameters from the game engine interface mechanism, analyzing the graphic parameters to derive desired sound effect parameters and integrating the desired sound effect parameters with the original sound effect parameters; and
a sound effect card for instructing at least one speaker to provide sounds under the control of the integration mechanism.

2. The video and audio signal processor according to claim 1 , wherein the game engine interface mechanism, the video mechanism, the video card, the integration mechanism and the sound effect card are provided on a mother board.

3. The video and audio signal processor according to claim 1 , wherein the integration mechanism comprises an analysis unit connected to the game engine interface mechanism and a sound-integrating unit connected to the analysis unit.

4. The video and audio signal processor according to claim 1, wherein the integration mechanism is an SOC.

5. The video and audio signal processor according to claim 1 , wherein the integration mechanism is an FPGA.
